# EUROPÄISCHE PATENTSCHRIFT

(11) **EP 0 973 861 B1**
(45) Veröffentlichungstag und Bekanntmachung des Hinweises auf die Patenterteilung: **12.09.2001**
(21) Anmeldenummer: 98925465.1
(22) Anmeldetag: 03.04.1998
(51) Int. Cl.: C11D 17/00, C11D 3/20, C11D 3/37

(54) **WASSERLÖSLICHER, WASSERENTHÄRTENDER BUILDER**
WATER-SOLUBLE, WATER-SOFTENING BUILDER
ADJUVANT ADOUCISSANT DE L'EAU SOLUBLE DANS L'EAU

(30) Priorität: 09.04.1997 DE 19714657
(43) Veröffentlichungstag der Anmeldung: 26.01.2000
(73) Patentinhaber: Reckitt Benckiser N.V., 2132 NZ Hoofddorp (NL)
(72) Erfinder: AHNSORGE, Harald, D-67069 Ludwigshafen (DE); ROBINSON, Paul, D-68526 Ladenburg (DE)
(74) Vertreter: Brown, Andrew Stephen
(86) Internationale Anmeldenummer: EP9801971
(87) Internationale Veröffentlichungsnummer: WO9845400

(56) Entgegenhaltungen:
- EP-A- 0 504 091
- EP-A- 0 812 808
- DE-A- 4 121 307
- DE-A- 4 318 902

## Beschreibung

Die Erfindung betrifft einen wasserlöslichen, wasserenthärtenden Builder in Form einer Tablette.

Wasserenthärtende Builder in Tablettenform sind vielfach bekannt. Tabletten haben verschiedene Vorteile gegenüber Pulverprodukten: Sie sind einfacher zu dosieren und handzuhaben und können einfacher dem Waschgut zugesetzt werden, sie sind kompakter und erleichtern eine wirtschaftliche Lagerung.

Die Anmelderin vertreibt selbst wasserenthärtende Tabletten (calgon 2-Phasen Tabs) und solche Tabletten werden beschrieben in EP-A1-0 628 627 (Benckiser), CH-577 937 (Lonza), WO-A1-95/21908 (Henkel) und EP-A2-0 622 449 (Hüls).

Üblicherweise werden wasserenthärtende Tabletten hergestellt durch Verpressen oder Kompaktieren von wasserenthärtenden Pulvern. Es ist jedoch schwierig ein ausgeglichenes Verhältnis zu finden zwischen der notwendigen Härte und Abriebsfestigkeit der Tablette und ihrer Eigenschaft in der Waschflotte schnell zu zerfallen und/oder sich aufzulösen. Bei Tabletten, die nur unter einem leichten Preßdruck hergestellt wurden, besteht die Neigung zum Zerbröseln und bei der Handhabung und der Verpackung zu zerfallen; stärker verpreßte Tabletten sind zwar haltbarer aber zerfallen und dispergieren auch in der Waschflotte schlechter.

Verschiedene Lösungen sind bereits vorgeschlagen worden, besonders bei Detergens-Tabletten, um deren physikalische Eigenschaften (Festigkeit, Abriebsfestigkeit und Dispersionsvermögen) zu verbessern.

GB 983243 und GB 989683 (Colgate-Palmolive) offenbaren Detergens-Tabletten mit verbesserten Auflösungseigenschaften, die durch Kompaktieren von sprühgetrockneten Detergenspulvern und Besprühen mit Wasser oder wäßriger Natriumsilikatlösung zur Verminderung des Anteils an Feinteilchen hergestellt wurden. Die gesamte Tablette wird mit einem filmbildenden Polymer überschichtet zur Verbesserung der Abriebsfestigkeit. Die Verwendung von Polyacrylsäure wird nicht offenbart.

EP-A-0 466 484 (Unilever) offenbart Detergens-Tabletten aus kompaktierten Teilchen enger Größenverteilung und gleichmäßiger und regulärer Teilchengröße. Daraus resultiert der Vorteil eines attraktiven Aussehens und eines besseren Zerfalls in der Waschflotte.

EP-A2-0 522 766 offenbart Detergenstabletten aus kompaktierten teilchenförmigen Detergens-Zusammensetzungen, in welchen zumindest ein Teil der Teilchen mit einem Material gecoatet ist, das als Bindemittel wirkt, aber auch den Zerfall in der Waschflotte fördert. Obgleich Polymere als geeignete Zerfallszusätze beansprucht werden, wird Polyacrylsäure nicht offenbart.

EP-A2-0 711 828 (Unilever) offenbart ein Verfahren zur Herstellung von Detergens-Tabletten durch Kompaktieren von teilchenförmigen Detergens-Zusammensetzungen, in denen ein Bindemittel verteilt ist, das eine Schmelztemperatur im Bereich von 35-90°C aufweist, wobei die Kompaktierung zu Tabletten bei einer Temperatur oberhalb von 28°C aber unterhalb der Schmelztemperatur des Bindemittels stattfindet. Polyacrylate werden genannt als mögliche Bindemittel, Polyacrylsäure wird jedoch nicht offenbart.

Polymere und Copolymere von Acrylsäure sind bekannte Bestandteile von Waschmitteln und Wasserenthärtern. Es ist auch bereits vorgeschlagen worden, Alkalisalze solcher Polymerer oder Copolymerer zu Tablettenformulierungen zuzugeben.

WO-A1-92/18604 (Henkel) offenbart ein Verfahren zur Herstellung von Detergens-Tabletten für Geschirrspülmaschinen, wobei Zusammensetzungen enthaltend Alkalipolyacrylat agglomeriert und im Fließbett getrocknet werden.

WO-A1-93/00419 (Henkel) offenbart ein Verfahren zur Herstellung von Detergens-Tabletten für Geschirrspülmaschinen, wobei eine vorhydratisierte Mischung von Alkalipolyacrylat und Natriumcarbonat hergestellt wird, welche dann mit den anderen Komponenten der Tablette vermischt wird.

WO-A1-95/21908 (Henkel) offenbart Tabletten, die Builder enthalten, einschließlich Schichtsilikaten und die einen reduzierten Wassergehalt besitzen und sich durch gute Wasserlöslichkeit auszeichnen sollen. Salze von Polyacrylaten werden hierbei als Disintegrationsmittel genannt.

EP-A1-628 627 (Benckiser) offenbart einen wasserlöslichen, wasserenthärtenden Builder in Form einer Tablette bestehend aus
A) 60-98 Gew.% einer Kombination aus
   a) Citrat und/oder Citronensäure und
   b) einem als Enthärter wirksamen Polymer
   in einem Gewichtsverhältnis von a:b von 70:30 bis 50:50, vorzugsweise 65:35 bis 55:45,
B) 0,5-6 Gew.% Polyethylenglykol
C) 0-38 Gew.% weiterer Hilfsstoffe

Obgleich Polyacrylsäure als ein Polymer mit wasserenthärtenden Eigenschaften angesehen werden kann, ist die Verwendung von Polyacrylsäure in dieser Druckschrift nicht ausdrücklich beschrieben.

Die Anmelderin hat sich zur Aufgabe gesetzt, die Tabletteneigenschaften (Härte, Festigkeit, Abriebsfestigkeit, Auflösungsvermögen in der Waschflotte) von wasserlöslichen, wasserenthärtenden Buildern in Form einer Tablette zu verbessern. Es wurde gefunden, daß diese Aufgabe dadurch gelöst werden kann, daß in solchen Tabletten, die 40-98 Gew.% einer Kombination aus a) einer organischen, multifunktionellen Polycarbonsäure oder deren Alkalisalzen und b) einem Polymer mit wasserenthärtenden Eigenschaften als Polymer mit wasserenthärtenden Eigenschaften Polyacrylsäure in der Säureform eingesetzt wird. Insbesondere soll erfindungsgemäß eine Polyacrylsäure verwendet werden mit einem Molekulargewicht von 1500 bis 8000.

Gegenstand der Erfindung ist somit ein wasserlöslicher, wasserenthärtender Builder in Form einer Tablette enthaltend 40-98 Gew.% einer Kombination aus
a) einer oder mehreren organischen, multifunktionellen Polycarbonsäure(n) oder deren Alkalisalzen und
b) einem Polymer mit wasserenthärtenden Eigenschaften
in einem Gewichtsverhältnis von a:b von 80:20 bis 50:50, dadurch gekennzeichnet, daß das Polymer mit wasserenthärtenden Eigenschaften eine teilneutralisierte Polyacrylsäure mit einem Molekulargewicht von 1500-8000 ist.

Unter einer organischen, multifunktionellen Polycarbonsäure wird eine mehrbasische Carbonsäure mit zusätzlichen funktionellen Gruppen, beispielsweise Hydroxygruppen und/oder Aminogruppen, verstanden. Geeignete multifunktionelle Polycarbonsäuren sind Gluconsäure, Weinsäure und Citronensäure. Bevorzugt wird Citronensäure, die, wie die anderen Säuren, in Säureform oder als Alkalisalz eingesetzt werden kann.

Als erfindungsgemäß einzusetzende Polyacrylsäure wird ein Homopolymer der Acrylsäure, welches noch freie Carbonsäuregruppen enthält, verstanden. Unter diesem Begriff soll erfindungsgemäß auch eine teilneutralisierte Polyacrylsäure verstanden werden.

Der Begriff "teilneutralisiert" in diesem Zusammenhang soll aber auf jeden Fall eine Neutralisation von mehr als 90% der freien Carboxylgruppen ausschließen.

Die einzusetzende Polyacrylsäure soll ein Molekulargewicht von 1500 bis 8000 besitzen.

Eine geeignete Polyacrylsäure, die im Handel erhältlich ist, ist das Produkt Norasol LMW45D der Firma Norsohaas. Dies ist eine teilneutralisierte Polyacrylsäure mit einem Molekulargewicht von 4500.

Die erfindungsgemäße Buildertablette kann außerdem weitere übliche Zusätze enthalten, insbesondere enthält sie vorzugsweise Polyethylenglycol, vorzugsweise in einer Menge von 0,5-6 Gew.%. Geeignete Polyethylenglycole sind solche mit relativ hohem Ethoxylierungsgrad, beispielsweise Polyethylenglycole mit einem Molekulargewicht von 1000 bis 6000.

Die erfindungsgemäßen Tabletten können weiterhin übliche Tablettierungshilfsmittel enthalten, wie beispielsweise mikrokristalline Zellulose und auch Natriumbicarbonat.

Härte, Löslichkeit und Abriebsfestigkeit der Tabletten werden nach folgenden Meßmethoden bestimmt:

Die Härte der Tabletten wurde bestimmt mit Hilfe eines Erichsen 486 Härtetestgeräts. Das Gerät mißt die Kraft, die erforderlich ist, um eine Tablette zu zerbrechen.

Die Löslichkeit einer Tablette wird dadurch gemessen, daß sie innerhalb eines Käfigs mit 6 mm weiten Fenstern in einem Becher enthaltend 1 1 Wasser von Raumtemperatur untergetaucht wird. Die Tablette wird als aufgelöst betrachtet, wenn alle Teilchen durch die Fenster des Käfigs ausgetreten sind.

Die Abriebsfestigkeit einer Tablette wird dadurch gemessen, daß 10 Tabletten in einen rechteckigen Plastikbehälter (170 mm x 110 mm x 110 mm) gelegt werden und der Behälter mit einer Geschwindigkeit von 40 Umdrehungen pro Minute während einer Minute rotiert wird. Die Menge an Pulver, die in dem Behälter erzeugt wird, wird gewogen und in Prozent des ursprünglichen Tablettengewichts vermerkt.

### Beispiel:

50 Teile Natriumcitrat-Dihydrat, 19 Teile Natriumbicarbonat, 22 Teile Norasol LMW45D (Polyacrylsäure), 3 Teile Polyethylenglycol (6000) und 6 Teile Avicel (mikrokristalline Zellulose) wurden trocken vermischt und das so erhaltene granuläre Produkt wurde in einer Rotationspresse bei einem Druck von 70 KN zu Tabletten verpreßt.

Die so hergestellten erfindungsgemäßen Tabletten wurden verglichen mit auf gleiche Weise hergestellten Tabletten, die anstelle von Polyacrylsäure das Natriumsalz eines Acrylsäure/Maleinsäure-Copolymers (Sokalan CP5 ex-BASF) bzw. das Natriumsalz eines teilneutralisierten Acrylsäure/Maleinsäure-Copolymers (Sokalan CP45 ex-BASF) enthielten.

Die genauen Zusammensetzungen der Vergleichsbeispiele A und B und die Testergebnisse bezüglich Härte, Löslichkeit und Brüchigkeit sind in der nachstehenden Tabelle zusammengestellt.

Aus diesen Vergleichsversuchen ist ersichtlich, daß durch den erfindungsgemäßen Einsatz von Polyacrylsäure in der Säureform die Härte der Tablette erhöht und ihre Abriebsfestigkeit verbessert werden konnte ohne Verschlechterung der Löslichkeitseigenschaften.

**Tabelle**

| Bestandteil | Vergleichsbeispiele | | Erfindung |
|---|---|---|---|
| | A (%) | B (%) | (%) |
| Citronensäure | 15 | 15 | - |
| Na-citrat-dihydrat | 27 | 27 | 50 |
| Kaliumbicarbonat | 27 | 27 | - |
| Natriumbicarbonat | - | - | 19 |
| Sokalan CP5 gran.® (1) | 11 | - | - |
| Sokalan CP45 gran.® (2) | 11 | 22 | - |
| Norasol LMW45D® (3) | - | - | 22 |
| PEG6000 | 3 | 3 | 3 |
| Avicel® (4) | 6 | 6 | 6 |

| Eigenschaften | Meßergebnisse | | |
|---|---|---|---|
| Härte (N) | 110 | 115 | 217 |
| Löslichkeit (s) | 60-70 | 60-70 | 60-70 |
| Abriebsfestigkeit (%) | 16 | 16 | 7 |

| | | | |
|---|---|---|---|
| (1) gran. Acrylsäure/Maleinsäure-Copolymer ex BASF | | | |
| (2) gran. Na-Salz eines teilneutralisierten Acrylsäure/ Maleinsäure-Copolymers ex BASF | | | |
| (3) Polyacrylsäure in Säureform, MG 4500, ex Norsohaas | | | |
| (4) mikrokristalline Cellulose | | | |

## Patentansprüche

1. Wasserlöslicher, wasserenthärtender Builder in Form einer Tablette enthaltend 40-98 Gew.% einer Kombination aus
a) einer oder mehreren organischen, multifunktionellen Polycarbonsäure(n) oder deren Alkalisalzen und
b) einem Polymer mit wasserenthärtenden Eigenschaften
in einem Gewichtsverhältnis von a:b von 80:20 bis 50:50, **dadurch gekennzeichnet, daß** das Polymer mit wasserenthärtenden Eigenschaften eine teilneutralisierte Polyacrylsäure mit einem Molekulargewicht von 1500-8000 ist.

2. Builder nach Anspruch 1 **dadurch gekennzeichnet, daß** die multifunktionelle Polycarbonsäure Zitronensäure ist.

3. Builder nach einem der vorgehenden Ansprüche **dadurch gekennzeichnet, daß** er außerdem 0,5-6 Gew.% Polyethylenglykol enthält.

4. Verwendung einer Polyacrylsäure mit einem Molekulargewicht von 1500-8000 zusammen mit einer organischen, multifunktionellen Polycarbonsäure oder deren Alkalisalz in einer Buildertablette zur Verbesserung deren Tabletteneigenschaften (Härte, Abriebsfestigkeit, Auflösungsvermögen in der Waschflotte).

## Claims

1. A water-soluble, water-softening builder in the form of a tablet comprising 40-98% by weight of a combination of
a) one or more organic, multifunctional polycarboxylic acid(s) or alkali metal salts thereof, and
b) a polymer with water-softening properties
in an a:b weight ratio of from 80:20 to 50:50, **characterized in that** the polymer with water-softening properties is a partially neutralized polyacrylic acid having a molecular weight of 1500-8000.

2. The builder as claimed in claim 1, **characterized in that** the multifunctional polycarboxylic acid is citric acid.

3. The builder as claimed in one of the preceding claims, which additionally comprises 0.5-6% by weight of polyethylene glycol.

4. The use of a polyacrylic acid having a molecular weight of 1500-8000 together with an organic, multifunctional polycarboxylic acid or alkali metal salt thereof in a builder tablet for improving the tablet properties thereof (hardness, abrasion resistance, solubility in the wash liquor).

## Revendications

1. Adjuvant hydrosoluble adoucisseur d'eau sous forme d'une tablette contenant 40 à 96 % en poids d'une association
a) d'un ou plusieurs acides polycarboxyliques organiques multifonctionnels ou leurs sels alcalins, et
b) d'un polymère doué de propriétés adoucisseuses d'eau
dans un rapport en poids de a à b de 80:20 à 50:50, **caractérisé en ce que** le polymère doué de propriétés adoucisseuses d'eau est un acide polyacrylique partiellement neutralisé ayant un poids moléculaire de 1500 à 3000.

2. Adjuvant suivant la revendication 1, **caractérisé en ce que** l'acidc polycarboxylique multifonctionnel est l'acide citrique.

3. Adjuvant suivant l'une des revendications précédentes, **caractérisé en ce qu'**il contient en outre 0,5 à 6 % en poids de polyéthylène-glycol.

4. Utilisation d'un acide polyacrylique de poids moléculaire compris entre 1500 et 8000 en association avec un acide polycarboxylique organique multifonctionnel ou un sel alcalin de cet acide dans une tablette d'adjuvant pour améliorer ses propriétés à l'état de tablette (dureté, résistance à l'usure par frottement, pouvoir de dissolution dans la liqueur de lavage).
